# EUROPEAN PATENT APPLICATION

(11) **EP 2 688 019 A1**
(43) Date of publication of application: **22.01.2014**
(21) Application number: 12176684.4
(22) Date of filing: 17.07.2012
(51) Int. Cl.: G06Q 10/06

(54) **Configuration of an industrial control system**

(71) Applicant: ABB Research Ltd., 8050 Zürich (CH)
(72) Inventor: Hadeli, Hadeli, 5400 Baden (CH); Obermeier, Sebastian, 5107 Schinznach-Dorf (CH); Hristova, Ana, 5400 Baden (CH); Schierholz, Ragnar, 5436 Würenlos (CH)
(74) Representative: ABB Patent Attorneys

(57) **Abstract**

A method for planning a reconfiguration of an industrial control system 10 comprises the steps of: receiving operational requirements 48 for at least one industrial computing facility 12 of the industrial control system 10; receiving cloud computing characteristics 54 of a plurality of cloud computing facilities 30; receiving cloud computing deployment rules 52; and generating a cloud computing deployment plan 58 by applying cloud computing deployment rules 52 on the operational requirements 48 and the cloud computing characteristics 54.

## Description

### FIELD OF THE INVENTION

The invention relates to a method, a computer program, computer-readable medium and a system for planning a reconfiguration of an industrial control system.

### BACKGROUND OF THE INVENTION

Industrial control systems comprise a plurality of computing facilities for controlling, supervising and monitoring industrial plants and processes. For example to become more flexible and to reduce costs, these tasks may be moved to cloud computing facilities (see for example EP 2 293 164).

Thus, industrial control systems may comprise cloud-based services, for example, industrial computing facilities like servers or databases that are virtually deployed to the cloud. These services may face special availability challenges, particularly if the connection to the cloud is lost.

However, as different computing facilities in an industrial control system may have different levels of criticality and thus different demands for redundancy, it is useful to define a strategy for redundancy. Furthermore, different providers of cloud computing, provide various offerings in terms of performance, privacy, security and reliability. For instance, placing production planning functionality in the cloud may require different requirements in comparison to placing historian data.

Usually, the reliability of a cloud based service is limited, i.e., a cloud computing facility may not be accessible all the times. In addition, based on the type of information, information put into a cloud may have different requirements of confidentiality.

Furthermore, there may be no way to automatically distinguish the cloud service offerings without contacting the cloud service provider and there may be a lack of dynamic and automatic identification of the most appropriate cloud service.

Current approaches to cloud computing usually put all functions and data, of all deployed industrial computing facilities, into one cloud computing facility without taking into account the individual requirements of each industrial computing facility that is deployed. However, this may pose different threats to the availability of the functions, for example if such a cloud fails or if the connection is interrupted.

### DESCRIPTION OF THE INVENTION

The object of the invention is to simplify the deployment of industrial computing facilities into cloud computing facilities without restricting the operational requirements or demands of the industrial computing facilities to be deployed.

This object is achieved by the subject-matter of the independent claims. Further exemplary embodiments are evident from the dependent claims and the following description.

An aspect of the invention relates to a method of configuring an industrial control system. An industrial control system may comprise a plurality of computing devices interconnected by a network and that are adapted for controlling, monitoring and/or supervising industrial processes and/or plants.

According to an embodiment of the invention, the method comprises the steps of: receiving operational requirements for at least one industrial computing facility of the industrial control system; receiving cloud computing characteristics of a plurality of cloud computing facilities; receiving cloud computing deployment rules; and generating a cloud computing deployment plan by applying cloud computing deployment rules on the operational requirements and the cloud computing characteristics.

In other words, deployment strategies for industrial computing facilities may be (for example automatically) derived from operational requirements of the industrial computing facilities that are matched to cloud computing characteristics of a number of cloud computing facilities.

With the method, deterministic information of the operation of the industrial computing facilities may be used for planning the deployment. For example, the operational requirements may be derived from system description files, the operational requirements may be analysed with the cloud computing deployment rules and, based on the analysis, deployment strategies may be provided. The deployment strategies may obey operational requirements such as: redundancy, availability, integrity, confidentiality, privacy, audit logging, and accessibility and/or performance/computation.

An industrial computing facility may be an asset of the industrial control system, for example a hardware system, a virtual system or a device, which is adapted for performing computational services for an industrial control system. For example, an industrial computing facility may be a server, a computer and/or a database server. Usually, the industrial computing facility may be connected to a network of the industrial controls system and may exchange information with other industrial computing facilities of the industrial control system.

Cloud computing may be aimed at delivering computational services that use shared resources, software, and information over a network (typically the Internet). A cloud or cloud computing facility may be defined by a system offering cloud computing services. Cloud computing may be defined as providing of computing and/or storage capacity as a service to the industrial control system. The complex infrastructure of the cloud computing facility may be virtualized to the industrial control system. A cloud computing service may be remotely hosted and connected to the industrial control system through a large scale network, for example the Internet.

A cloud computing facility may comprise a plurality of computers interconnected by a network. The internal structure of the cloud computing facility may be completely virtual to the industrial control system.

A cloud computing facility may also be part of the industrial control system and/or may be connected via a local network with the industrial control system. In the industrial control system, the services of the cloud computing facility may be provided by a local interface that locally provides the services to a local network of the industrial control system.

A cloud computing facility may be directly connected to the local network and/or may be part of the industrial control system. In such case, the risk of a failed internet connection may be reduced and/or a continuous internet connection is not necessary.

According to an embodiment of the invention, the operational requirements are comprised of at least one of computational requirement, redundancy requirements, criticality requirements, dependency requirements, security requirements and privacy requirements of a computing facility of the industrial control system. It has to be noted that the operational requirements (as well as the cloud computing deployment rules and/or the cloud computing characteristics) may be data stored in files, databases and/or may be transmitted via a network. This data also may be provided in the form of user input and/or written documents.

According to an embodiment of the invention, the method further comprises the steps of: receiving data files from the at least one industrial computing facility; and extracting the operational requirements from the data files. For example, expert information and/or system description / configuration files for the industrial computing facilities may be analysed and the operational requirements may be (automatically) extracted from these files.

According to an embodiment of the invention, the operational requirements comprise dependencies between the industrial computing facilities. If one or a plurality of industrial computing facilities is to be deployed, their internal and external dependencies may also be taken into account. For example, when a critical system of the industrial control system is dependent on an industrial computing facility, the industrial computing facility should be redundantly deployed.

According to an embodiment of the invention, the dependencies are provided via a dependency graph. The dependency graph may be a data structure comprising the computing facilities as nodes and dependencies as directed or non-directed connections between the nodes. The relevant cloud deployment strategies may be identified by using dependency graphs.

According to an embodiment of the invention, the cloud computing characteristics comprise information on computing capabilities, security capabilities and/or reliability capabilities of a cloud computing facility.

For example, a cloud computing facility that offers perfect privacy on data may be used. For example (homomorphic) encryption may be used, if the data is to be treated confidentially.

According to an embodiment of the invention, a cloud computing deployment rule delimits cloud computing characteristics for a cloud computing facility that may be used for deploying an industrial computing facility based on operational requirements of the industrial computing facility. For example, a cloud computing deployment rule may be that an industrial computing facility dependent on critical devices must be deployed on at least two cloud computing facilities to ensure redundancy. Another cloud computing deployment rule may be to deploy an industrial computing facility with only specific privacy requirements into a cloud computing facility that offers privacy characteristics that at least meet these privacy requirements.

According to an embodiment of the invention, a cloud computing deployment rule specifies that an industrial computing facility is to be deployed redundantly to at least two cloud computing facilities. The two virtual copies of the industrial computing facility may be synchronized in order to achieve greater availability.

According to an embodiment of the invention, the cloud computing deployment plan specifies/determines which industrial computing facility is to be deployed into which cloud computing facility. The cloud computing deployment plan may comprise a list of deployment strategies for each industrial computing facility to be deployed. For example, a deployment strategy may be to deploy a specific industrial computing facility on a specific cloud computing facility and to set the privacy settings for the cloud computing facility to the highest level. Another deployment strategy may be to deploy a specific industrial computing facility to a remote and a local cloud computing facility and to synchronize the data.

In particular, the cloud deployment plan may comprise deployment strategies for deploying a plurality of industrial computing facilities into multiple cloud computing facilities.

According to an embodiment of the invention, the cloud computing deployment plan specifies which cloud computing characteristics of a cloud computing facility has to be selected when deploying a specific industrial computing facility into the cloud computing facility. In other words, the settings of the services hosting the industrial computing facility may be adapted to the operational requirements of the industrial computing facility.

According to an embodiment of the invention, the industrial computing facility is selected from the group consisting of a plant optimizer, a historian, a maintenance scheduler, an engineering server, a data miner for preventive maintenance, a DCS server and a manufacturing execution system.

An aspect of the invention relates to a computer program for planning the reconfiguration of an industrial control system, which, when being executed by a processor, is adapted to carry out the steps of the method as described in the above and in the following. The planning of the deployment may completely be automated by using such a computer program.

An aspect of the invention relates to a computer-readable medium, in which such a computer program is stored. A computer-readable medium may be a floppy disk, a hard disk, a USB (Universal Serial Bus) storage device, a RAM (Random Access Memory), a ROM (Read Only memory) an EPROM (Erasable Programmable Read Only Memory) or a FLASH memory. A computer readable medium may also be a data communication network, e.g. the Internet, which allows downloading of program codes.

An aspect of the invention relates to a method for reconfiguring an industrial control system which comprises the steps of: selecting at least one or a plurality of industrial computing facilities of the industrial control system; generating a cloud deployment plan with the steps of the planning method; and or deploying the one or more computing facilities to one or more cloud computing facilities according to the cloud deployment plan. Usually, more than one industrial computing facility may be selected for deployment and the industrial computing facilities may be deployed to a plurality of (different) cloud computing facilities, which may have different cloud characteristics (e.g. in regards to security, computing etc.).

When an industrial computing facility is deployed to a cloud computing facility, all tasks and services of the industrial computing facility may be moved to the cloud computing facility. For example, when the industrial computing facility comprises a database, the data stored in the database may be stored in the cloud computing facility. When the industrial computing facility offers a specific computing task to other industrial computing facilities, for example via a local network, the programs for executing the tasks may be stored and may be executed in the cloud computing facility. Only an interface for the (virtualized) industrial computing facility may remain in the industrial control system. The hardware of the industrial computing facility may be removed from the industrial control system.

An aspect of the invention relates to a planning system for planning the reconfiguration of an industrial control system, which comprises at least one computing device adapted for executing the steps of the method as described in the above and in the following. For example, the planning system may be a computer with the above mentioned computer program installed.

It has to be understood that features of the planning method as described in the above and in the following may be features of the computer program, the computer-readable medium and or the planning system as described in the above and in the following.

These and other aspects of the invention will become apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 schematically shows an industrial control system before industrial computing facilities are deployed to cloud computing facilities according to an embodiment of the invention.
Fig. 2 schematically shows an industrial control system after industrial computing facilities are deployed to cloud computing facilities according to an embodiment of the invention.
Fig. 3 shows a flow diagram for planning a reconfiguration of an industrial control system according to an embodiment of the invention.
Fig. 4 shows a dependency graph according to an embodiment of the invention.

In principle, identical parts are provided with the same reference symbols in the figures.

### DETAILED DESCRIPTION OF EXEMPLARY EMBODIMENTS

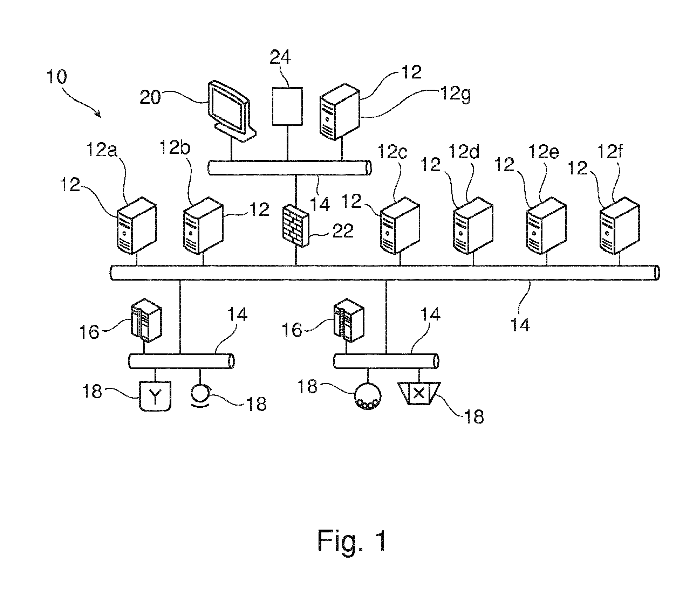

Fig.1 shows an industrial control system 10 before a reconfiguration. The industrial control system 10 comprises a plurality of industrial computing facilities 12, for example a plant or process optimizer 12a, a historian 12b, a maintenance scheduler 12c, an engineering server 12d, a preventive maintenance analyser 12e or data miner 12e for preventive maintenance and a DCS server 12f. The industrial computing facilities 12 are interconnected by a local network 14.

The industrial control system 10 comprises further controllers 16 for controlling devices 18 (pumps, switches, valves etc.) that are connected to the local network 14.

An operator HMI (human machine interface) 20 and a manufacturing execution system 12g are connected to the local network 14, but are situated behind a firewall 22.

For planning the deployment of specific industrial computing facilities 12 to one or more cloud computing facilities, industrial control system configuration information is required. The latter may be available from an engineering server, planning system or planning device 24 eventually connected to the local network 14.

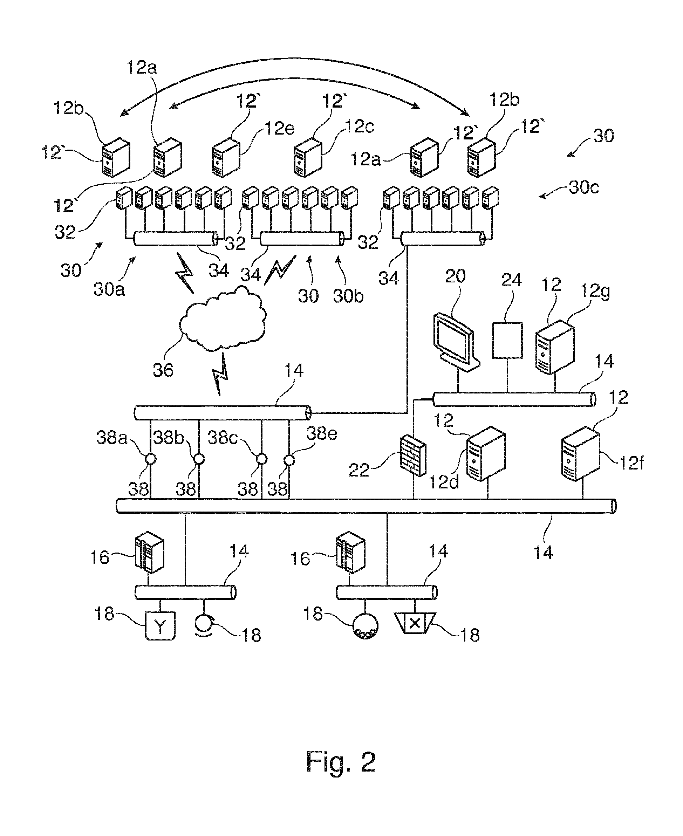

Fig. 2 shows the industrial control system 10 after the reconfiguration with the aid of the planning system 24. Some of the industrial computing facilities 12 have been deployed to cloud computing facilities 30, for example, the historian 12b, the optimizer 12a, the preventive maintenance analyser 12e and maintenance scheduler 12c. As indicated in Fig 2, the deployed computing facilities 12a, 12b, 12c and 12e are virtual computing facilities 12' that are executed in the cloud computing facilities 30.

In particular, the historian 12b and the optimizer 12a are redundantly hosted or executed in a first cloud computing facility 30a and second computing facility 30c. The instances of the historian 12b and the optimizer 12a in the two cloud computing facilities 30a, 30c are synchronized, such that redundant data is always provided. Also the preventive maintenance analyser 12e is hosted or executed in the cloud computing facility 30a. The maintenance scheduler 12c is hosted or executed in a further cloud computing facility 30b.

Each cloud computing facility 30 comprises a plurality of computers 32 interconnected by a network 34.

The cloud computing facilities 30a, 30b are connected via the Internet 36 to the industrial control system 10. In such a way, that the industrial computing facilities 12a, 12b, 12c are remotely hosted on these cloud computing facilities 30a, 30b.

The cloud computing facility 34 is directly connected to the local network 14 of the industrial control system 14 and may be seen as a local cloud computing facility 30c.

In the industrial control system 10, interfaces 38, i.e. an interface 38a for the optimizer 12a , an interface 38b for the historian 12b, an interface 38c maintenance scheduler 12c, and an interface 38e for the preventive maintenance analyser 12e, are provided, which may be accessed by the other components of the industrial control system 10.

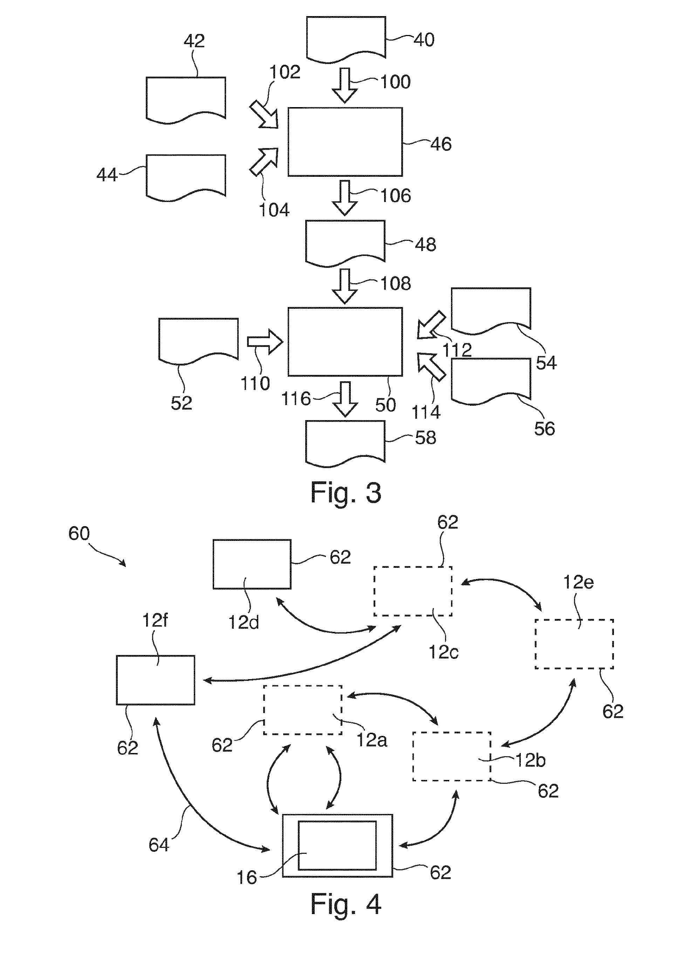

Fig. 3 shows a flow diagram, how the reconfiguration of the industrial system 10 may be performed. Some or all of the steps of the method shown in Fig. 3 may be performed by the planning system 24. However, it is also possible that some or all of the steps are performed manually.

In step 100, a selection 40 of the industrial computing facilities 12 to be deployed in the cloud computing facilities 30 is received. The selection 40 may be in the form of a data file or may be manually input into the planning system 24.

In step 102 a data file 42, for example a system description file or a configuration file is received that comprises configuration information of the industrial computing facilities 12 to be deployed. For example, the data files 42 may be retrieved via the network 14.

In optional step 104, further information 44 for instance expert information may be received. The expert information may comprise other implicit information that is considered important for the operation of industrial control systems. The further information 44 may be received in the form of a data file or may be manually input.

The selection 40, the data file 42 and the further information 44 may be received in a requirements generation module or component 46 of the planning system 24.

In step 106, operational requirements 48 for the industrial computing facilities 12 to be deployed are extracted and/or generated from the available data 42, 44, for example by the requirements generation module 46. In this step, the retrieved information 42, 44 is analyzed and the operational requirements 48 are extracted. The analysis may include (but is not limited to) a computational analysis, a redundancy analysis, a criticality analysis, a dependency analysis, and/or a security analysis.

The following table shows an example for operational requirements that may be generated during step 106.

| **Industrial computation facility 12** | **Computational requirements** | **Redundancy requirements** | **Security requirements** |
|---|---|---|---|
| **Plant optimizer 12a** | Requires powerful multicore computer | No redundancy unit required | Overall system must be secured. |
| | | | Limited access to the system. |
| | | | Communication must be secured, tamper proof. |
| | | | Access logging required. |
| **Historian 12b** | Run on normal computer | Redundancy required. Data recording must be persistent at all time | Data in Historian must not be accessed by unauthorized party. |
| | | | Communication must |
| | | | be secured. Access logging required. |
| | | | Data is confidential. |
| **Data miner for Preventive** | Run on powerful multicore computer | No redundancy unit required | Overall system must be secured. |
| **Maintenance 12e** | | | Communicate securely to the maintenance scheduler. |
| **Maintenance scheduler 12c** | Run on normal computer | No redundancy unit required | Overall system must be secured. |
| | | | Data is confidential. |

The operational requirements may be accompanied by or may comprise dependencies between the industrial computing devices 12.

Fig. 4 shows a dependency graph 60 with dependencies between industrial computing devices 12. The dependency graph 60 for the dependencies that may be part of the operational requirements 48 comprises nodes 62 associated with industrial computing facilities 12 and edges 64 that indicate dependencies between the industrial computing facilities 12. The boxes with dashed lines symbolize the industrial computing facilities 12a, 12b, 12c, 12e that should be deployed. For instance, engineering server 12d is dependent on results from the maintenance scheduler 12c.

From the dependency graph 60 shown in Fig. 4, the following dependency information may be extracted:

The plant optimizer 12a and historian 12b require information from the controller 16 and vice versa.

The DCS server 12f and the MES server 12d are connected to the maintenance scheduler 12c.

The maintenance scheduler 12c requires information from the data miner 12e.

The data miner 12e needs data from the historian 12b.

The plant optimizer 12a needs data from historian 12b.

The DCS server 12f is connected to the controller 16.

The controller 16 may be defined as critical assets or critical devices. The criticality of such assets may be determined by the asset owner. For example, it may be presumed that any asset that is involved in a closed control loop (responsible for the operation of the control system) is a critical asset.

With respect to Fig. 3, in steps 108, the operational requirements 48 (that may comprise dependencies explained in to Fig. 4) are received, for example in a deployment planning module or component 50 of the planning system 24. It has to be noted that the operational requirements 48 may be directly inputted into the component 46, for example with a manually created file or via manual input.

In step 110, cloud computing deployment rules 52 are received, for example in the component 50. The cloud computing deployment rules 52 may be seen as expert rules that have been designed by experts on deployment.

The following table shows examples for cloud computing deployment rules 52:

| |
|---|
| **If** (an industrial computing facility is dependent to a critical asset) **then** (deploy industrial computing facility redundantly on different cloud computing facilities) |
| **If** (an industrial computing facility needs redundancy) **then** (deploy the industrial computing facility and its backup unit on different cloud computing facilities) |
| **If** (an industrial computing facility holds data AND data is confidential) **then** (apply, for example homomorphic , encryption to the data) |
| **If** (an industrial computing facility must be completely secured) **then** (apply multi-factor authentication on accessing the cloud computing facility) |
| **If** (an industrial computing facility needs to run on a powerful multicore computer) **then** (deploy the industrial computing facility to the cloud computing facility that offers parallel computing) |
| **If** (an industrial computing facility needs to run on a normal computer) **then** (deploy the industrial computing facility to a normal cloud computing facility) |
| **If** (an industrial computing facility needs to communicate securely to another industrial computing facility) **then** (deploy the industrial computing facility only to the cloud computing facility that offers a secure communication channel) |

In step 112 cloud computing characteristics 54 of the cloud computing facilities 30 are received, for example in the component 50. For example, the cloud computing characteristics 54 may be predefined by an expert.

The following table shows examples of cloud computing characteristics 54 for the three cloud computing facilities 30a, 30b, 30c:

| **Cloud 30** | **Characteristics/Properties** |
|---|---|
| **30a** | • High Performance Computing (HPC) Clusters |
| | • Virtual private cloud |
| | • Support multiple location |
| | • Support virtual machine hosting |
| | • Supports privacy (for example through homomorphic encryption) |
| **30b** | • Normal computing clusters |
| | • Public cloud |
| | • Virtual private cloud |
| | • Support virtual machine hosting |
| **30c** | • High Performance Computing (HPC) Clusters |
| | • Private cloud inside the customer's IT site |
| | • Supports privacy due to ownership by plant |
| | • High reliability due to ownership by plant |
| | • Support multiple location |
| | • Support virtual machine hosting |

In optional step 114, additional information 56 on available cloud related technology is received, for instance in the component 50. For example, the additional information 56 may be received in the form of a data file or may be manually inputed. The additional information 56 may be used for specifying the cloud computing characteristics 54 in greater detail.

In step 116, a cloud computing deployment plan 58 is generated. In this step, the cloud computing deployment rules 52 are applied on the operational requirements 48 and the cloud computing characteristics 54.

Based on the operational requirements 48 (that may comprise dependency information), a deployment strategy is generated for every industrial computing facility 12 that has been selected to be deployed. The operational requirements 48, that may be queried from a system description file 42 and from expert information 44, may be correlated with the cloud computing characteristics 54 by considering the cloud computing deployment rules 52. The result of the correlation is the strategy on how to best deploy such assets.

The deployment strategies can vary from each other in implementation, depending on the possible characteristics of the respective cloud computing facility 30. However, the deployment strategies shall fulfil the defined operational requirements 48 of the respective industrial computing facility 12.

The following table shows examples of deployment strategies relating to different operational requirements.

| **Operational requirements** | **Deployment strategies** |
|---|---|
| Redundancy requirement | Deploy a master industrial computing facility and a standby industrial computing facility on different physical cloud computing facilities (the cloud computing facility may be owned by the same entity, however, may provide two different access routes) |
| Confidentiality requirement | The industrial computing facility is encrypted in the cloud computing facility and a query to the industrial computing facility may be performed by using a homomorphic encryption method. |
| | Alternatively, the industrial computing facility is deployed into two separate cloud computing facilities, where the first cloud computing facility hosts the odd bit of the data and the other cloud computing facility hosts the even bit of the data. |

The cloud computing deployment plan 58 comprises the deployment strategies or cloud hosting strategies for the selected industrial computing facility 12a, 12b, 12c, 12e.

The following table shows a cloud computing deployment plan 58 generated for the selected industrial computing facilities 12a, 12b, 12c, 12e:

| **Industrial computing facility 12** | **Deployment strategy** |
|---|---|
| **Plant optimizer 12a** | Deploy on cloud computing facility 30a and 30c. |
| | Apply complete security features from the cloud computing facility. |
| **Historian 12b** | Deploy on private cloud on cloud computing facility 30a and 30c. |
| | Apply homomorphic encryption. |
| | Apply complete security features from the cloud computing facility. |
| **Data miner 12e** | Deploy on cloud computing facility 30a. |
| | Apply complete security features from the cloud computing facility |
| | Apply secure communication. |
| **Maintenance scheduler 12c** | Deploy on cloud computing facility 30b. |

While the invention has been illustrated and described in detail in the drawings and foregoing description, such illustration and description is to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A method of configuring an industrial control system (10), the method comprising the steps of:
receiving operational requirements (48) for at least one industrial computing facility (12) of the industrial control system (10);
receiving cloud computing characteristics (54) of a plurality of cloud computing facilities (30);
receiving cloud computing deployment rules (52);
generating a cloud computing deployment plan (58) by applying cloud computing deployment rules (52) on the operational requirements (48) and the cloud computing characteristics (54).

2. The method of claim 1,
wherein the operational requirements (48) comprises at least one of computational requirements, redundancy requirements, criticality requirements, dependency requirements, security requirements, privacy requirements of a computing facility of the industrial control system.

3. The method of claim 1 or 2, further comprising the steps of:
receiving data files (42) from the at least one industrial computing facility (12);
extracting the operational requirements (48) from the data files (42).

4. The method of one of the preceding claims, comprising the step of:
receiving operational requirements (48) for a plurality of industrial computing facilities (12) of the industrial control system;
wherein the operational requirements (48) comprise dependencies (64) between the industrial computing facilities (12).

5. The method of claim 4,
wherein the dependencies (64) are provided via a dependency graph (60).

6. The method of one of the preceding claims,
wherein the cloud computing characteristics (54) comprise information on the computing capabilities, security capabilities, reliability capabilities of a cloud computing facility (30).

7. The method of one of the preceding claims,
wherein a cloud computing deployment rule (52) delimits cloud computing characteristics (54) for a cloud computing facility (30) that may be used for deploying an industrial computing facility (12) based on operational requirements (48) of the industrial computing facility (12).

8. The method of one of the preceding claims,
wherein a cloud computing deployment rule (52) specifies that an industrial computing facility (12) is to be deployed redundantly to at least two cloud computing facilities (30a. 30c).

9. The method of one of the preceding claims,
wherein the cloud computing deployment plan (58) specifies which industrial computing facility (12) is to be deployed into which cloud computing facility (30).

10. The method of one of the preceding claims,
wherein the cloud computing deployment plan (58) specifies which cloud computing characteristics of a cloud computing facility (30) has to be selected when deploying a specific industrial computing facility (12) into the cloud computing facility (30).

11. The method of one of the preceding claims,
wherein the industrial computing facility (12) is selected from the group consisting of a plant optimizer, a historian, a maintenance scheduler, an engineering server, a data miner for preventive maintenance, a DCS server and a manufacturing execution system.

12. The method of one of the preceding claims, comprising the steps of:
selecting at least one computing facility (12) of the industrial control system (10);
deploying the at least one computing facility (12) to at least one cloud computing facility (30) according to the cloud deployment plan (58).

13. A computer program for a configuration of an industrial control system (10), which, when being executed by a processor, is adapted to carry out the steps of the method of one of claims 1 to 12.

14. A computer-readable medium, in which a computer program according to claim 13 is stored.

15. A planning system (24) for planning a reconfiguration of an industrial control system (10), the planning system (24) comprising at least one computing device adapted for executing the steps of the method of one of claims 1 to 12.
